# EUROPEAN PATENT APPLICATION

(11) **EP 0 892 305 A1**
(43) Date of publication of application: **20.01.1999**
(21) Application number: 98202317.8
(22) Date of filing: 09.07.1998
(51) Int. Cl.: G03B 31/06, G03B 21/64

(54) **Slide with magnetic marks that can be read by multiple heads**

(30) Priority: 18.07.1997 US 896844
(71) Applicant: EASTMAN KODAK COMPANY, Rochester, New York 14650 (US)
(72) Inventor: McIntyre, Dale Frederick, Rochester, New York 14650-2201 (US); Pagano, Daniel Michael, Rochester, New York 14650-2201 (US); Patton, David Lynn, Rochester, New York 14650-2201 (US); Weissberger, Edward, Rochester, New York 14650-2201 (US)
(74) Representative: Lewandowsky, Klaus, Dipl.-Ing.

(57) **Abstract**

A slide and/or a slide mount component holds an image-storing medium and has magnetic material disposed uniformly throughout the slide and/or the slide mount component for recording on established regions thereof. In one embodiment, the slide mount of the slide includes a plurality of orthogonal surfaces and a plurality of tracks of magnetic material, each being disposed at least a predetermined distance from the other tracks. In another embodiment, the tracks are on surfaces which are parallel to each other and on opposite sides of the slide. Respective magnetic tracks may store the same or unique sets of data.

## Description

This invention relates generally to the field of magnetic data storage, and in particular, to film slides and slide mounts with information stored thereon magnetically.

The use of magnetic strips for storing information is widespread, for example, in credit and debit card purchasing systems, inventory management, and other information-specific applications.

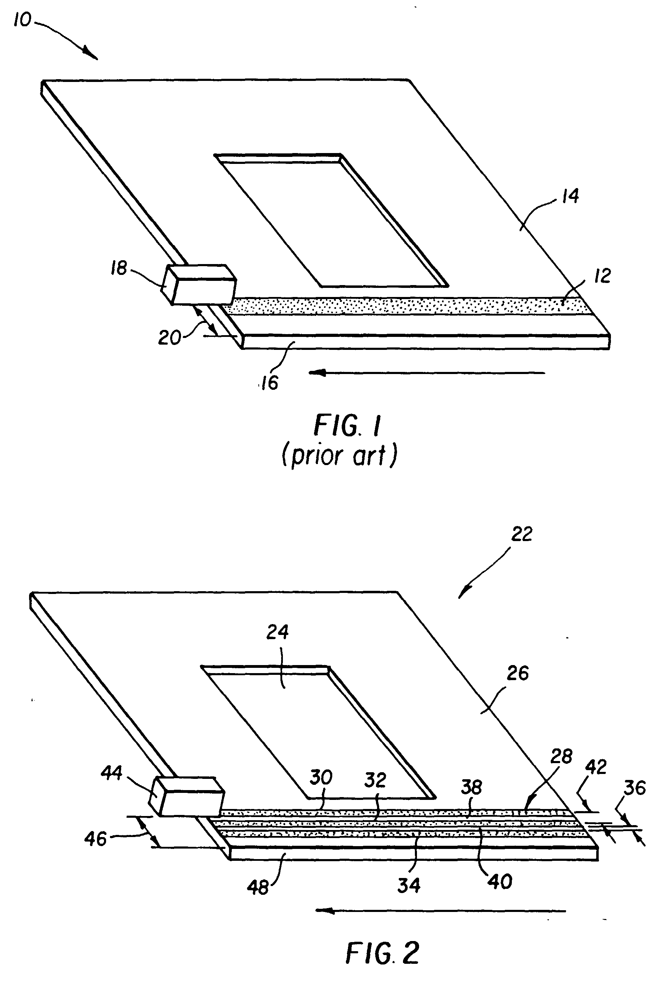

Slide projection devices have adopted such magnetic strip techniques for storing information pertinent to a film slide on the slide itself, for example, in lieu of or in combination with written labeling on such slides. As shown in FIG. 1, for a slide 10 in the prior art, a magnetic recording area such as a strip having regions 12 may be affixed to or disposed upon a slide mount 14. The slide 10 may carry data relative to the images to be projected using the slide 10, such as the nature of the images as pictures and/or text, dates and times associated with the images, and so forth.

With a single magnetic recording area 12 affixed upon such slides, the projection system designers have heretofore been constrained to encode all data to be stored thereon in the single magnetic recording area 12. Accordingly, different types of data are stored together, possibly in different data formats, which limits the amount of data and constrains the physical component placement in the design of projectors to use such a slide. Differentiation of the types and formats of the data stored on the single magnetic recording area 12 requires more processing capabilities.

In addition, in order to read the data on the single region 12, a magnetic reader 18 is required, in which the reader 18 has at least one reading head positioned in a fixed location and/or distance; for example, a distance 20 from the edge 16 of the slide 10, in order to be aligned with the single magnetic recording area 12. During the passing of the slide 10 during a reading operation in a direction relative to the reader 18, as shown by the arrow in FIG. 1, misalignment of the slide 10 relative to the position of the reader 18 may prevent the requisite alignment with the tracks, and thus prevent accurate reading, or any reading at all, of the data stored in the magnetic recording area 12.

Accordingly, a need exists for slides which stores data which do not suffer from misalignment relative to the data readers in order to improve processing of the slides. In addition, a need exists for slides which stores diverse types of data.

In addition, a need exist for slides storing data in a manner which allows for projectors constructed at low cost. Further, a need exists of the duplication of data on different physical areas of a slide. Moreover, a need exists for the capability to perform data partitioning which allows more data to be stored on slides while providing the flexibility in implementing different projector designs.

It is recognized herein that a slide mount with a plurality of magnetic strips or tracks of embedded magnetic particles provides diverse configurations to partition the storage of data thereon. A projection system designer using such slide mount is afforded advantages in the storage of data associated with the slides. Improved data reading devices in projection apparatus may thus be used to read the data stored on the slides, for example, in conjunction with the projections of the images of the slides. Accordingly, beneficial applications may be implemented which are not constrained by the use of a single magnetic recording area on slide mounts of the prior art.

It is an object of the invention to provide a slide mount with at least two magnetic recording regions, with the regions being physically separated by a predetermined minimal distance, for example, a distance greater than a track pitch and/or guard band widths associated with magnetic tracks.

It is a further object of the invention to provide a first magnetic recording region for storing image projection information such as zoom, crop, framing data, and so forth, and to provide a second magnetic recording region for storing image enhancement and/or processing information for improved projection functionality and other features.

It is another object of the invention to provide such a second region for storing annotation data associated with the images stored on the slide.

It is another object of the invention to provide such annotation data for reading and processing to be output by a visual output device, such as a liquid crystal display (LCD), included with or operatively connected to the projector.

It is further object of the invention to provide such annotation data corresponding to text for output by the visual output device.

It is another object of the invention to provide such annotation data corresponding to audio data for output by an audio output device such as a speaker included with or operatively connected to the projector.

It is a further object of the invention to provide a first magnetic recording region on a first surface of the slide mount, and a second magnetic recording region on a second surface of the slide mount.

It is another object of the invention to provide such first and second magnetic recording regions on first and second surfaces, respectively, with such first and second surfaces being orthogonal to each other.

It is another object of the invention to provide such first and second magnetic recording regions on first and second surfaces, respectively, with such first and second surfaces being parallel to each other.

It is another object of the invention to provide such first and second magnetic recording regions on first and second surfaces, respectively, with such first and second surfaces being on opposite sides of the slide mount.

It is also an object of the invention to provide a plurality of magnetic tracks grouped in first and second magnetic recording regions, with the first magnetic recording region being used for storing a first set of data on a first surface of the slide mount, and the second magnetic recording region being used for storing a second set of data on a second surface of the slide mount, and with the second set of data being identical to the first set of data and used as redundant data.

It is also an object of the invention to provide such first and second surfaces, with the second surface being opposite and parallel to the first surface.

It is also an object of the invention to provide a plurality of magnetic recording regions grouped in sets, with such sets being longitudinally oriented to be parallel to each other and also longitudinally disposed along a shorter one of the dimensions of the slide mount.

It is an additional object of the invention to provide a plurality of tracks disposed in parallel orientations to each other on a first surface of the slide mount for storing first data, and a second plurality of tracks for storing the first data ad disposed on a second surface opposite and parallel to the first surface, with the second plurality of tracks being oriented orthogonal to the first plurality of tracks.

In an illustrative embodiment of the invention, a slide and a slide mount component of such a slide are arranged for holding a image-storing medium such as a transparent photograph. In one embodiment, the disclosed slide mount of the slide includes a plurality of surfaces; and a plurality of regions of magnetic material, with each region being disposed on at least one of the plurality of surfaces so as to be at least a predetermined distance from the other regions. In another embodiment, each of a plurality of regions of magnetic material on the surface of the slide mount forms a respective magnetic track for holding a unique set of data.

Such disclosed slides and slide mounts provide for improved alignment relative to data readers in order to improve data capture from the slides. In addition, such disclosed slides and slide mounts provide for the storing of diverse types of data without the need for differentiation of the data, thus providing for improved image processing.

The features and advantages of the present invention will be readily apparent, and are to be understood, by referring to the following detailed description of the preferred embodiments of the present invention, taken in conjunction with the accompanying drawings, in which:
FIG. 1 is a perspective view of a prior art slide having a single magnetic recording area adhered to the surface of a slide mount;
FIG. 2 is a perspective view of a first embodiment of the slide of the present invention having a plurality of parallel sets of data tracks with a predetermined spacing therebetween;
FIG. 3 is a perspective view of a second embodiment of the slide of the present invention having two groups of parallel sets of data tracks;
FIGS. 4-5 are perspective front and back views of a third embodiment of the slide of the present invention having two groups of sets of tracks on front and back surfaces, respectively;
FIG. 6 is a perspective view of a fourth embodiment of the slide of the present invention having a magnetic track on a front edge of the slide mount;
FIG. 7 is a perspective view of a fifth embodiment of the slide of the present invention having a magnetic track on a rear edge of the slide mount;
FIG. 8 is a perspective view of a sixth embodiment of the slide of the present invention having orthogonal magnetic tracks; and
FIG. 9 is a perspective back view of a seventh embodiment being, an alternative embodiment of the slide in FIG. 2, with orthogonally oriented magnetic tracks.

Referring in specific detail to the drawings, with common reference numbers identifying similar or identical elements, steps, and features, as shown in FIGS. 2-8, the present invention is directed to a film slide, such as the slide 22 shown in FIG. 2, for use in the projection of images stored in image-storing medium (not shown in FIGS. 2-8) mounted in a aperture 24 of a slide mount 26 of the disclosed slide 22. The slide mount 26 is formed from a plastic mixture which further includes a substantially uniform distribution of magnetic particles, as described, for example, in the Kodak Product Brochure titled "Inherent Intelligence with the New Magnetic Card System from Kodak", 1995.

Upon molding such material into a slide mount 26, the uniformity of distribution allows the establishment of a plurality of surfaces upon which magnetic recording may be conducted to store information. The plurality of regions for storing data may use a magnetic data format known in the art. The plurality of established and/or predetermined regions for recording may be grouped into a plurality of tracks, with the tracks being longitudinally oriented to be parallel to each other and also longitudinally disposed along a shorter one of the dimensions of the slide mount. Alternatively, the regions may be oriented to be longitudinally disposed along a longer one of the dimensions of the slide mount.

In a first embodiment shown in FIG. 2, the slide 22 has a region 28 for established magnetic recording configured in a plurality of magnetic data tracks 30, 32, and 34. Each of the tracks 30-34 is disposed on at least one of the plurality of surfaces so as to be at least a predetermined distance from the other regions. In one embodiment, the predetermined distance may be the width 36 of the guard bands 38 and 40 between the tracks 30-34. A track pitch 42 may be associated with the tracks 30-34, in which the track pitch 42 is a measure of the center-to-center distance between neighboring tracks. For example, the guard bands 38 and 40 may have a width 36 of about 1.5 mm, and the track pitch 42 may be about 2.5 mm. In a manner known in the prior art, the tracks 30-34 and the guard bands 38 and 40 may also be integrated in a single magnetic strip; that is, a magnetic strip may include a plurality of tracks and at least one guard band.

The slide 22 is thus configured to be read by at least one reader 44 during a reading operation, in which the slide 22 and/or the reader 44 are moved relative to each other so that a reading head (not shown in FIG. 2) passes substantially close to the tracks 32 and 34. The reader 44 may have a single reading head, or may have a set of reading heads. Alternatively, a plurality of readers may read the plurality of tracks, with each reader adapted to read data from a single track. In FIG. 2, only a single reader 44 is shown for illustrative purposes, with the reader 44 adapted to read a first track 30. It is understood that other magnetic readers may be employed to read magnetically stored data from the plurality of tracks 30-34.

Using the slide 22 shown in FIG. 2, the first magnetic track 30 may store a first set of data, and the second magnetic track 32 may store a second set of data. As shown in FIG. 2, the first and second magnetic tracks may be on first and second surfaces of the slide mount, with the first and second surfaces being portions of a single surface. Alternatively, the first and second surfaces may be surfaces of individual components of the slide mount 26, with the first and second surfaces configured to form a planar surface; for example, by fusing or connecting components together.

In one embodiment, the first and second set of data stored on respective tracks 30 and 32 may be identical, such that the second set of data on a second track 32 is redundant data which is stored in a different location on the same slide 22. As shown in FIG. 1, in the prior art, the singular location of the magnetic recording area 12 requires the slide 10 to be positioned in a specific orientation relative to the reader 18 in order to read the data stored in the magnetic recording area 12; that is, with the magnetic recording area 12 oriented in an upward direction relative to the slide mount 14 to be read by the reader 18 having a reading head oriented in a downward direction toward the magnetic recording area 12. However, using the disclosed slide 22 shown in FIG. 2 with redundant data stored in both tracks 30 and 32, the slide 22 may be mounted in more than one position or orientation in a slide projector slot relative to the reader 44 with the magnetic reading head.

For example, if the slide 22 is positioned relative to the reader 44 such that the reader 44 is about a predetermined distance 46 from an edge 48 of the slide 22, the reader 44 may read data from the first track 30. On the other hand, if the reader 44 is positioned to be at a distance less than the predetermined distance 46, for example, to be at a distance of (E - G) in which E is the predetermined distance 46 and G is the guard band width 36, the reader 44 may read from the second track 32. Thus, redundancy of the storage of data in tracks 30 and 32 removes the need to accurately position the slide 10 in a single orientation relative to the reader 44, and thus avoids the problems of misalignment of tracks and readers. Accordingly, such redundant storage in multiple tracks 30-34 is advantageous in the use of the slide and in the reading of the data stored thereupon.

Alternatively, the first and second sets of data in respective first magnetic track 30 and second magnetic track 32, respectively, allow the slide 22 to store different types of data on different tracks. Accordingly, each track may store a unique set of data. In another alternative embodiment, a first set of tracks, such as the tracks 30 and 32 in FIG. 2, may store first data, and a second set of tracks, such as track 34 in FIG. 2, may store second data different from the first data. The use of different sets of tracks storing different data in different locations on the slide 22 allows more than one track in the first set to store redundant information, such as described above.

In addition, the use of different tracks for storing different types of data allows the slide 22 to have greater versatility in applications. For example, the first magnetic track 30 may store image projection information for controlling the visual projection of the images, and the second magnetic track 32 may store image enhancement information for enhancing the images to be displayed. The image projection information may include zoom information, crop information, and framing information for processing the images stored in the image-storing medium. The framing information may include data corresponding to formats for normal/classic (C) television, high definition (H) or advanced television, and panoramic (P) display. Such framing information may be used to indicate settings for the framing and display of the images stored by the image-storing medium using appropriate processing.

The image enhancement information may include information supplemental to the displayed images, such as other visual displays, as well as information for controlling the displaying of the images. For example, the image enhancement information stored on a slide may include timing information associated with the slide, which a processor of a projector uses to determine the duration of time for displaying the corresponding slide.

A projector adapted to process the disclosed slide 22 may include apparatus and methods known in the art for reading and processing the data stored in the magnetic tracks 30-34, with such data being used to control the processing of the images stored in the image-storing medium positioned in the aperture 24 of the slide 22. Accordingly, such a projector includes a slot or armatures for positioning and holding the slide 22, the magnetic reader 44 for reading the magnetic tracks 30-34 on the slide 22, ad a sliding apparatus for moving the magnetic reader 44 and/or the slide 22 relative to each other to perform a magnetic reading operation. The projector may also include, or be operatively connected to, a processing unit having, for example, a microprocessor for generating control signals from the data read from the magnetic tracks 30-34. Such control signals may be used by a projection control unit to perform zooms, cropping, and framing of the images to be displayed.

In addition, the projector may also include output devices known in the art for outputting visual and/or audio signals corresponding to the data stored in the magnetic tracks. In one embodiment, the image enhancement information includes annotation data associated with the images stored in the image-storing medium. Such annotation data may be processed by the projector using the processing unit to output visual and/or audio signals by appropriate output devices. The annotation data may correspond to text for visual output by an output device, such as a display of a computer-based device. The display may be a liquid crystal display (LCD) and/or a light emitting diode (LED) display connected to the projector. Alternatively, the annotation data may correspond to audio data for audio output by an output device, which may beta speaker connected to the projector. The audio data may be voice data recorded by a person using a microphone connected to a magnetic recording device to perform voice-overs recorded on at least one of the tracks 30-34 to annotate each slide. Alternatively, the audio data may correspond to predefined audio messages recorded on each slide by a computing device controlled by inputs from an annotating person. Other visual and/or audio data may be stored on the magnetic tracks 30-34, such as video, animation, and so forth, which is processed and output by appropriate output devices receiving such data read from the magnetic tracks 30-34.

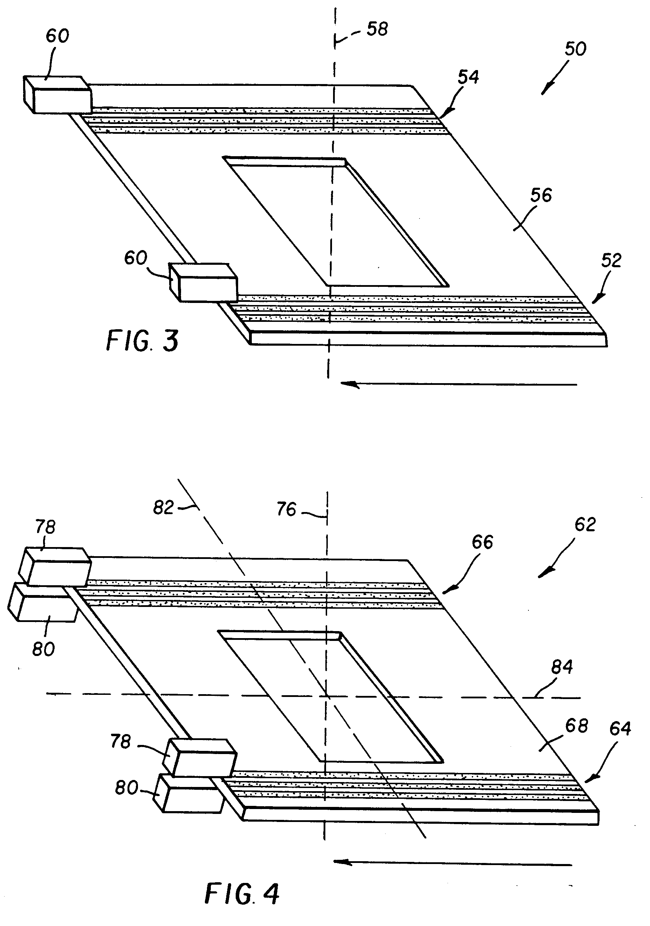

In alternative embodiments shown in FIGS. 3-5, a first set of tracks are disposed in parallel orientation to each other for storing first data, and a second set of tracks parallel to the first set stores second data. In the embodiment shown in FIG. 3, the slide 50 has a first set 52 of tracks and a second set 54 of tracks disposed on the same surface 56 of the slide mount. Accordingly, the first set 52 and the second set 54 are interchangeable upon a 180° rotation of the slide 50 about a central axis 58 extending through a center point associated with the slide 50. The first set 52 and the second set 54 may then be read by a plurality of readers 60 regardless of 180° rotations about the central axis 58.

In another alternative embodiment, as shown in FIGS. 4-5, the front and back views, respectively, of a slide 62 have two groups of tracks on the front surface and two groups of tracks on the back surface, respectively. The slide 62 has first and second sets 64, 66 of tracks disposed in parallel orientation to each other on a first surface 68 of the slide mount for storing first data, and third and fourth sets 70, 72 of tracks for storing second data and disposed on a second surface 74 parallel to the first surface 68, but on the opposite side of the slide 62. Accordingly, the first and second sets 64, 66 on the first surface are interchangeable upon a 180° rotation of the slide 62 about a central axis 76 for reading by upper readers 78. The third and fourth sets 70, 72 on the second surface 74 are interchangeable upon a 180° rotation of the slide 62 about the central axis 76 by lower readers 80. In addition, the first and second sets 64, 66 of tracks and the third and fourth sets 70, 72 of tracks may be read by readers 78 and 80 upon a 180° rotation of the slide 62 about either of the axes 82 and 84 in the plane of the slide 62 and extending through a center point associated with the slide 62.

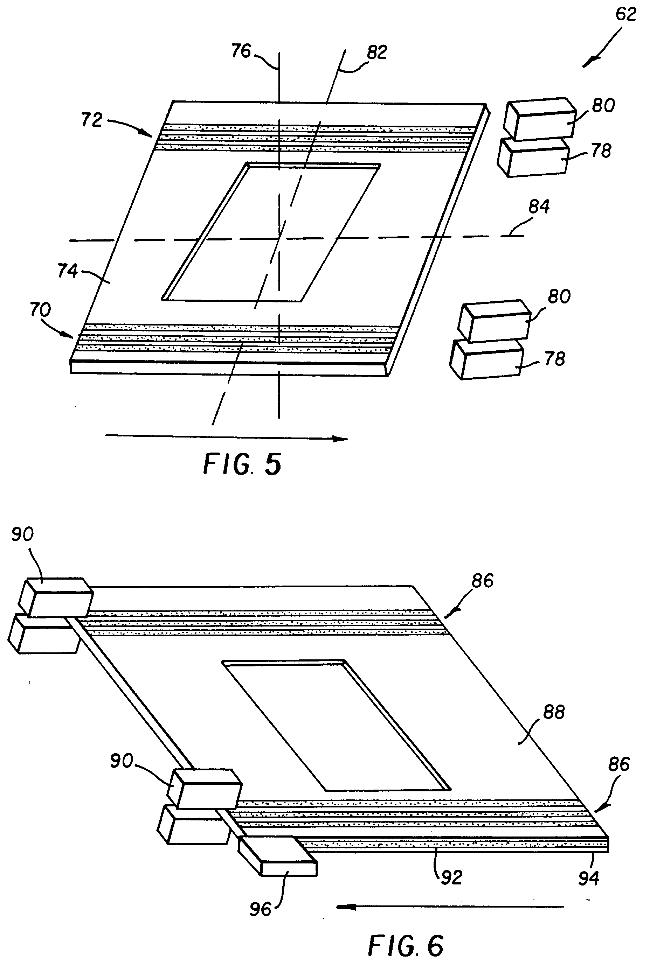

In another alternative embodiment shown in FIGS. 6-8, a first set of tracks is oriented to be orthogonal to a second set of tracks. As shown in FIG. 6, the first set 86 is disposed on a first surface 88 to be read by first readers 90, and a second set 92 of tracks is positioned on a front edge 94 of the slide mount. The front edge 94 is a second surface of the slide mount which is orthogonal to the first surface 88 on which the first set 86 of tracks is mounted. Accordingly, the front edge 94 and thus the second set 92 are orthogonal to the first set 86. A second reader 96 is orthogonally oriented to read magnetic material disposed upon the second set 92 of tracks on the front edge 94.

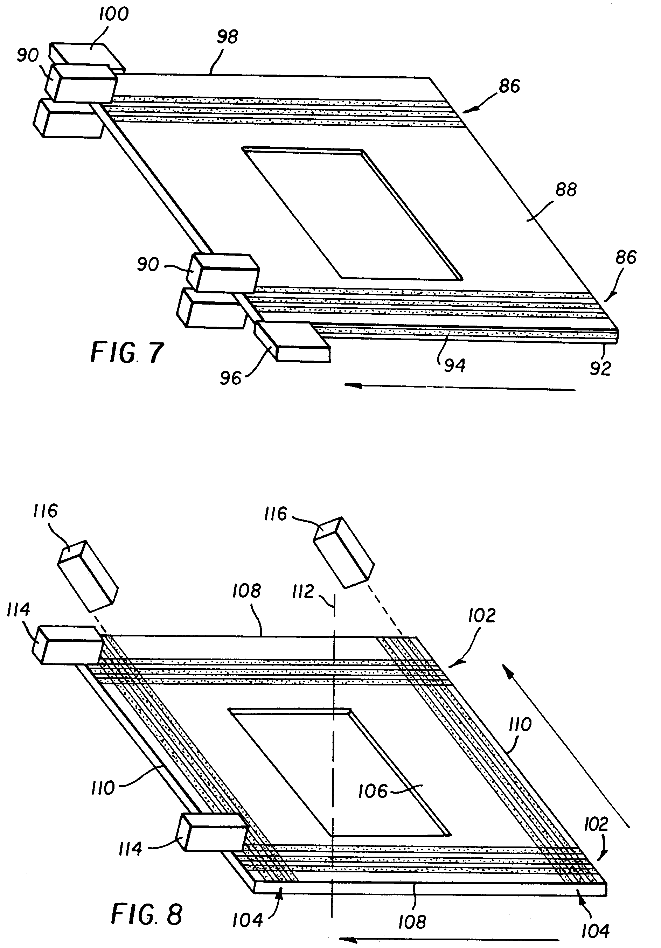

In the embodiment shown in FIG. 7, the second set 92 of tracks may also include a magnetic track (not shown in FIG. 7) on a rear edge 98 of the slide mount to be read by a reader 100 diametrically opposite to the reader 96 and orthogonally oriented to the first surface 88. The embodiments shown in FIGS. 6-7 also permit the readers 96 and 100 associated with the edges to perform a slide aligning function. That is, the readers 96 and 100 cause the slide to be aligned relative to the readers 90 as the slide is moved during the reading operation. Accordingly, such improved alignment insures proper reading of the data from the magnetic tracks 86 on the surface 88.

As shown in FIGS. 6-7, the readers 90 may have appropriately oriented reading heads for reading tracks on either side or on both sides of the slide. The embodiments shown in FIGS. 6-7 also have the rotational advantages described above in conjunction with FIGS. 3-5.

In another embodiment shown in FIG. 8, a first set 102 of tracks is orthogonal to a second set 104 of tracks, with both sets 102 and 104 disposed on the same surface 106 of the slide. In addition, each of the first set 102 of tracks ad the second set 104 of tracks may be positioned at a predetermined distance from a respective edge 108 and 110 of the slide. In one embodiment, the sets 102 and 104 of tracks store identical data, and such redundancy in conjunction with the identical predetermined positioning of the sets 102 and 104 from respective edges 108 and 110 allows the slide to be rotatable about a central axis 112, such that any of the readers 114 and 116 may read the data from tracks aligned therewith. Referring to FIG. 1, slides 10 in the prior art have been required to be oriented in a specific position relative to a single reader 18 in order to align a single recording area 12 with the single reader 18. Rotation of such a prior art slide 10 about an axis prevents alignment, and thus prevents proper reading of data from the single recording area 12. However, the disclosed slide shown in FIG. 8 does not require such a specific rotational orientation relative to the readers 114 and 116, since any one of the sets 102 and 104 may be aligned with an appropriate one of the readers 114 and 116 Upon a 90° rotation, or multiple thereof, of the slide about the central axis 112.

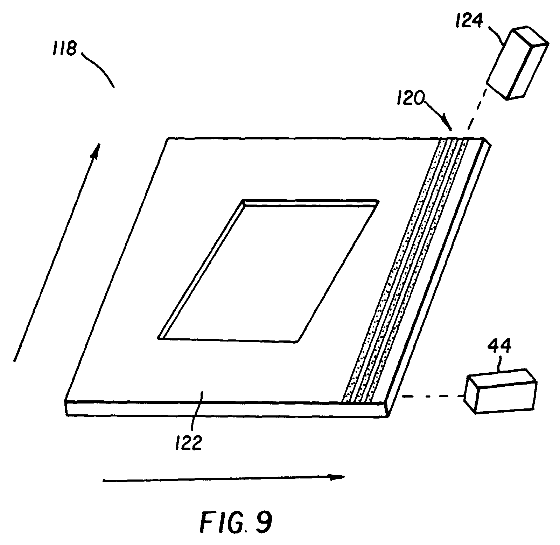

In a further alternative embodiment, a slide 118 has a front view as shown in FIG. 2 and a rear view as shown in FIG. 9. Accordingly, a first recording region 28 is longitudinally disposed on the first surface 26 to be read by the reader 44, and, as shown in FIG. 9, a second set 120 of tracks is longitudinally disposed on a second surface 122 of the slide 118 to be read by a second reader 124. The first surface 26 is parallel to the second surface 122 and lies on the opposite side of the slide 118, and the first recording region 28 is orthogonally oriented with respect to the second set 120 of tracks. The reader 44 reads the first recording region 28 (not shown in FIG. 9) when the slide 118 is moved in a first direction, and the reader 124 reads the second set 120 when the slide 118 is moved in a second direction different from the first direction. In particular, the first and second directions are orthogonal.

In use, the first recording region 28 may store information of a first type, and the second set 120 may store data of a second type different from the first type, which allows each of the readers 44 and 124 to be dedicated to receive only a specific type of data for processing. Accordingly, due to the asymmetry of the orientation of the first recording region 28 relative to the second set 120, rotation of the slide 118 about any axis may intentionally avoid alignment of the dedicated readers with tracks having data not associated with the dedicated readers. Such a configuration may be used for rapid processing of slides, for example, in which improperly positioned slides are not read but instead are skipped.

While the disclosed slides are particularly shown and described herein with reference to preferred embodiments, it is to be understood that various modifications in form and detail may be made therein without departing from the scope and spirit of the present invention.

### PARTS LIST

- 10: prior art slide
- 12: prior art magnetic track
- 14: prior art slide mount
- 16: prior art edge of prior art slide
- 18: magnetic reader
- 20: distance of reader from edge of slide
- 22: disclosed inventive slide
- 24: aperture of disclosed inventive slide
- 26: disclosed inventive slide mount
- 28: recording region
- 30: first magnetic track
- 32: second magnetic track
- 34: third magnetic track
- 36: guard band width
- 38: first guard band
- 40: second guard band
- 42: track pitch
- 44: magnetic reader
- 46: distance between reader and edge of slide
- 48: edge of disclosed inventive slide
- 50: slide
- 52: first set of tracks
- 54: second set of tracks
- 56: surface
- 58: central axis
- 60: readers
- 62: slide
- 64: first set of tracks, first group
- 66: first set of tracks, second group
- 68: first surface
- 70: second set of tracks, first group
- 72: second set of tracks, second group
- 74: second surface
- 76: central axis
- 78: upper readers
- 80: lower readers
- 82: axis
- 84: axis
- 86: first set of tracks
- 88: first surface
- 90: first reader
- 92: second set of tracks
- 94: front edge
- 96: orthogonally oriented reader
- 98: rear edge
- 100: orthogonally oriented reader
- 102: first set of tracks
- 104: second set of tracks
- 106: surface of slide
- 108: first edge of slide
- 110: second edge of slide
- 112: central axis
- 114: first readers
- 116: second readers
- 118: slide
- 120: second set of tracks
- 122: second surface
- 124: second reader

## Claims

1. A slide mount for holding an image-storing medium, the slide mount comprising:
a plurality of surfaces; and
a plurality of established magnetic recording regions, each region being disposed on at least one of the plurality of surfaces so as to be at least a predetermined distance from the other regions.

2. The slide mount of claim 1 wherein the plurality of regions includes first and second magnetic tracks disposed on first and second surfaces of the slide mount, respectively.

3. The slide mount of claim 2 wherein the first and second surfaces are oriented orthogonally or parallel or on opposite sides of the slide mount.

4. The slide mount of claim 2 or 3 wherein the first magnetic track stores a first set of data on the first surface, and the second magnetic track stores a second set of data on the second surface of the slide mount and the second set of data is identical to the first set of data.

5. A slide comprising:
an image-storing medium;
a slide mount for holding the image-storing medium; and
a plurality of established magnetic recording regions, each region being disposed on the slide mount so as to be at least a predetermined distance from the other regions.

6. The slide of claim 5 wherein the plurality of established magnetic recording regions includes first and second magnetic recording regions oriented orthogonally or parallel or on opposite sides of the slide mount.

7. The slide of claim 5 or 6 wherein the plurality of regions include first and second magnetic tracks, with the first magnetic track storing image projection information and the second magnetic track storing image enhancement information.

8. The slide of claim 7 wherein the image projection information includes data from the group consisting of zoom information, crop information, and framing information for processing the images stored in the image-storing medium.

9. The slide of claim 7 or 8 wherein the image enhancement information includes annotation data associated with the images stored in the image-storing medium.

10. The slide of claim 6, 7, 8, or 9 wherein one of the regions includes annotation data corresponding to text for visual output or audio data for audio output by an output device.
